# EUROPÄISCHE PATENTSCHRIFT

(11) **EP 2 694 902 B1**
(45) Veröffentlichungstag und Bekanntmachung des Hinweises auf die Patenterteilung: **24.01.2018**
(21) Anmeldenummer: 12711649.9
(22) Anmeldetag: 02.04.2012
(51) Int. Cl.: F27B 7/20, F27D 17/00, B01D 53/50, B01D 53/75, C04B 7/36

(54) **VERFAHREN UND ANLAGE ZUR HERSTELLUNG VON ZEMENTKLINKER UND ZUR REINIGUNG DER DABEI ENTSTEHENDEN ABGASE**
PROCESS AND PLANT FOR PRODUCING CEMENT CLINKER AND FOR PURIFYING THE OFFGASES FORMED
PROCÉDÉ ET SYSTÈME DE FABRICATION DE CLINKER ET D'ÉPURATION DES GAZ BRÛLÉS PRODUITS

(30) Priorität: 08.04.2011 DE 102011001933
(43) Veröffentlichungstag der Anmeldung: 12.02.2014
(73) Patentinhaber: Elex Cemcat AG, 8603 Schwerzenbach (CH)
(72) Erfinder: ZURHOVE, Franz-Josef, 79761 Waldshut-Tiengen (DE)
(74) Vertreter: Tetzner, Michael
(86) Internationale Anmeldenummer: PCT/EP2012/055976
(87) Internationale Veröffentlichungsnummer: WO 2012/136631

(56) Entgegenhaltungen:
- WO-A1-2009/089559
- DE-A1- 4 000 795
- DE-A1-102009 030 902
- DE-A1-102009 048 370

## Beschreibung

Die Erfindung betrifft ein Verfahren und eine Anlage zur Herstellung von Zementklinker und zur Reinigung der dabei entstehenden Abgase.

Der Prozess der Herstellung von Zementklinker erfolgt heute üblicherweise mit Drehrohröfen, denen Calcinier- und Schwebegasvorwärmanlagen vorgeschaltet sind. Durch die eingesetzten Brenn- und Rohstoffe werden eine Vielzahl von unerwünschten Spurenelementen dem Prozess zugeführt, die je nach Spezies ganz oder nur zum Teil in den Zementklinker eingebunden werden. Ein anderer Teil entweicht gasförmig mit dem Abgas. Andere Schadstoffe, wie beispielsweise die Stickoxide, die über das Abgas den Vorwärmer verlassen, werden im Prozess generiert. Schwefeloxidemissionen entstehen überwiegend nicht durch Brennstoffschwefel, sondern durch pyrithaltige Rohmaterialien, die bereits in den obersten Stufen des Vorwärmers freigesetzt und dort nicht wie der Brennstoffschwefel überwiegend durch CaO zu CaSO₄ reagieren. Chlor und Fluor werden ebenfalls aus Roh- und Brennstoffen eingetragen und entweichen teilweise mit dem Abgas in Form von HCl und HF. Außerdem wird Quecksilber durch Brennstoffe und Rohmaterialien dem Prozess zugeführt und entweicht aufgrund seiner hohen Flüchtigkeit vollständig aus dem Vorwärmer.

Als Stand der Technik zur chemischen Rauchgasreinigung der sauren Gasbestandteile SOₓ, HCl und HF sind die Injektion von Kalkhydrat und Natriumbicarbonat (Natriumhydrogencarbonat) allgemein bekannt.

Die Temperaturen in der obersten Vorwärmerstufe sind für ein effiziente Schwefeleinbindung mit Kalkhydrat häufig zu niedrig. Die Zahl der Zyklonstufen legt diese Temperatur primär fest, die so gewählt wird, dass gerade noch ausreichend Wärme für die Mahltrocknung vorhanden ist und der mit höheren Temperaturen einhergehende erhöhte Brennstoffverbrauch vermieden wird. Flüchtige Schwefelverbindungen werden bereits in der obersten Zyklonstufe freigesetzt, so dass an diesem Ort auch das Sorbens vorliegen muss. Die zunehmend schärfer werdenden Grenzwerte können durch eine Kalkhydrateindüsung daher technisch und/oder wirtschaftlich häufig nicht mehr erreicht werden. Die in anderen Fällen benötigten hohen Molverhältnis CaO/SOₓ verändern auch die CaO-Konzentration im Zementklinkerherstellprozess und damit die Eigenschaften des hergestellten Zementklinkers in unerwünschter Weise. Eine Alternative zur heißen Injektion des Kalkhydrats ist eine Stelle mit niedrigem Abstand zum Wassertaupunkt. Die kälteste Stelle, die dieser Bedingung am nächsten käme, liegt am Prozessfilter vor dem Abgaskamin. Der niedrige Abstand zum Wassertaupunkt wird für hohe Abscheidegrade benötigt, ist selbst an dieser Stelle nicht vorhanden und kann nur mit extremem technischen Aufwand erreicht werden.

Die Eindüsung von Alkalihydrogencarbonat ergibt eine wesentlich effizientere Schadstoffadsorption als die von Kalkhydrat. Hier sind Abscheidegrade der sauren Schadstoffkomponenten von 70% bis weit über 90% schon mit Molverhältnissen von 1,0 - 1,5 erreichbar. Auch ist die vorliegende Gastemperatur des Vorwärmerabgases dafür geeignet. Alkalien, wie Natrium, sind allerdings für den Zementklinkerherstellprozess sehr störend und muss auf sehr niedrige Konzentrationen begrenzt werden. Die Eindüsung dieses Sorbens in das staubbeladene Abgas des Zementherstellungsprozesses führt daher zwangsweise zu einer nicht hinnehmbaren Vermischung des Staubs mit Natrium. Das Massenverhältnis des im Abgas mitgeführten Staubes zum Sorbens beträgt meistens mehr als 100 und kann leicht Werte von 1000 überschreiten. Diese großen Staubmengen müssten entsorgt werden, was nicht möglich ist. Die Entsorgung wäre auch aufgrund des am Sorbens anhaftenden Chlors und Schwefels erforderlich, der nicht vollständig in den Zementherstellungsprozess zurückgeführt werden darf und daher zum überwiegenden Teil ausgeschleust werden muss.

In der WO 2009089559 A wird ein Verfahren angegeben, welches eine Vorentstaubung des Vorwärmerabgases, vorzugsweise durch ein Heißelektrofilter, vorsieht und einen SCR-Katalysator direkt dahinter anordnet. Der SCR-Katalysator reduziert Stickoxide mit zudosiertem Ammoniak oder Ammoniak enthaltenden Verbindungen und oxidiert auch die meisten Kohlenwasserstoffverbindungen, speziell die gesundheitsschädlichen langkettigen und aromatischen Verbindungen. Zudem wird elementares Quecksilber bei Anwesenheit von Halogenen oxidiert. Durch die Vorentstaubung auf vorzugsweise mehr als 90-95% kann die Menge an Abgasstaub stark reduziert werden. Die verbleibende Staubmenge wäre daher grundsätzlich für eine Alkalihydrogencarbonateindüsung hinter dem Katalysator geeignet. Dieses gilt allerdings nur für den so genannten Direktbetrieb, bei der die Gase, ggf. nach einer Abkühlung durch eine Wassereindüsung in einem Kühlturm, direkt zum Prozessfilter geleitet werden.

Da das heiße Abgas einer Zementherstellungsanlage aber zu etwa 80% der Betriebszeit über eine Rohmühle zwecks Trocknung und Mahlung des Rohmaterials geführt wird, nimmt das Abgas in der Mühle wieder hohe Staubmengen auf. Dieser Betrieb wird als Verbundbetrieb bezeichnet. Der im Abgas der Rohmühle enthaltene Staub, das so genannte Zementrohmehl, wird üblicherweise wieder in Zyklonen auf einen Restgasstaub von 20 - 50 g/Nm³ abgeschieden. Nach den Zyklonen der Rohmühle herrschen Temperaturen von 85-110°C. Ein Teil des Gases wird zur Rohmühle rezirkuliert, während der andere Teil zum abschließenden Prozessfilter vor dem Abgaskamin geführt wird. Die hohen Reststaubmengen nach dem Zyklonen der Rohmühle würden wiederum zu einer starken Verdünnung eines eingedüsten Sorbens führen, die der bereits beschriebenen Problematik nach dem Vorwärmer entspricht.

Weiterhin ist die Temperatur nach der Mühle für die erforderliche Umwandlung des Natriumbicarbonats in Natriumcarbonat, welches die für die Sorption erforderliche hohe Porosität erzeugt, zumeist nicht ausreichend. Die Vorentstaubung vor dem SCR-Katalysator ist nur für ca. 20% der Betriebszeit wirksam und daher nicht praktikabel. Aus diesen Gründen kam die Verwendung von Alkalihydrogencarbonat im Zusammenhang mit der Reinigung von Abgasen bei der Zementherstellung nicht in Betracht.

Aus der DE 40 00 795 A1 ist weiterhin ein Verfahren zur Reinigung der Abgase von Anlagen zur Herstellung von Zementklinker bekannt, wobei die Abgase der Vorwärmzone nach Durchsetzen eine Kühlturms oder einer Rohmühle entstaubt werden, bevor sie in einer Filterzone von Schadstoffen gereinigt werden. Hierfür ist eine zur Einbindung von NH₄-Verbindungen, Schwermetallen und Spurenelementen sowie von SO₂ dienende Filterstufe und eine zur Reduzierung von NOₓ-Verbindung dienende Filterstufe vorgesehen.

DE 10 2009 030 902 A1 betrifft ein Verfahren zur Behandlung von Schwefeloxide enthaltenden Abgasen, bei dem die Schwefeloxide mittels Alkalihydrogencarbonat und/oder -carbonat unter oxidierenden Bedingungen und/oder in Gegenwart von Sauerstoff zu Alkalisufat umgesetzt werden und nachfolgend mit einem Calciumhalogenid zu Calciumsulfat und Alkalihalogenid umgesetzt werden. Auch in der DE 10 2009 048 370 A1 wird Alkalihydrogencarbonat und/oder -carbonat zur Entschefelung zugegeben.

Der Erfindung liegt daher die Aufgabe zugrunde ein Verfahren und eine Anlage zur Herstellung von Zementklinker und zur Reinigung der dabei entstehenden Abgase anzugeben, wobei auch im Verbundbetrieb mit einer Rohmühle eine wirtschaftlich sinnvolle und effektive Abscheidung von Schadstoffen möglich ist.

Erfindungsgemäß wird diese Aufgabe durch die Merkmale der Ansprüche 1 und 6 gelöst.

Das erfindungsgemäße Verfahren zur Herstellung von Zementklinker und zur Reinigung der dabei entstehenden Abgase, umfasst im Wesentlichen folgende Verfahrensschritte:
- Zementrohmehl wird in einem Vorwärmer mittels heißer Abgase vorgewärmt und anschließend ggf. vorcalciniert,
- das vorgewärmte und ggf. vorcalcinierte Zementrohmehl wird in einem Drehrohrofen zu Zementklinker gebrannt,
- der Zementklinker wird in einem Kühler abgekühlt,
- die im Vorwärmer genutzten heißen Abgase werden in einer Rohmühle zur Aufbereitung des Zementrohmehls eingesetzt,
- ein dabei entstehendes staubhaltiges Mühlenabgas wird in einer Abscheideeinrichtung im Staubgehalt auf weniger als 5g/Nm³, vorzugsweise weniger als 1g/Nm³, reduziert,
- in einer Calciniereinrichtung (10) wird Alkalihydrogencarbonat durch Injektion in ein Heißgas zu Alkalicarbonat calciniert,
- in den im Staubgehalt auf weniger als 5g/Nm³ reduzierten, von der Abscheideeinrichtung zum Prozessfilter geteilten Teil des Mühlenabgases wird das Alkalicarbonat zugegeben und vermischt und
- das dabei entstehende Mischgas wird nachfolgend dem Prozessfilter zur Abscheidung von mit Schadstoffen belasteten Staub zugeführt.

Die erfindungsgemäße Anlage zur Herstellung von Zementklinker und zur Reinigung der dabei entstehenden Abgase besteht im Wesentlichen aus
- einem Vorwärmer zum Vorwärmen von Zementrohmehl,
- einem optionalen Calcinator zum Vorcalcinieren des vorgewärmten Zementrohmehls,
- einen Drehrohrofen zum Brennen des vorgewärmten und ggf. vorcalcinierten Zementrohmehls zu Zementklinker,
- einen Kühler zum Kühlen des Zementklinkers,
- einer Rohmühle zum Trocknen und Mahlen von Zementrohstoffen zu Zementrohmehl, welche zur Zuführung von heißen Vorwärmerabgasen mit dem Vorwärmer in Verbindung steht,
- einem optional vorhandenen SCR-Katalysator, welcher nach dem Vorwärmer und vor den Rohmühle in den Gasstrom integriert ist
- einer sich an die Rohmühle anschließenden Abscheideeinrichtung zur Vorentstaubung des Mühlenabgases der Rohmühle, die einen Abscheidegrad aufweist, der zu einem Reststaubgehalt im Mühlenabgas von weniger als 5g/Nm³, vorzugsweise weniger als 1g/Nm³, führt,
- einer Calciniereinrichtung (10) mit einem Heißgasanschluss, einer Zuführstelle für Alkalihydrogencarbonat und einem Ausgang,
- einem nachgeschalteten, vor einem Abgaskamin angeordneten Prozessfilter zum Reinigen des vorentstaubten Mühlenabgases und
- einer mit dem Ausgang der Calciniereinrichtung in Verbindung stehenden Zuführstelle für Alkalicarbonat in eine die Abscheideeinrichtung mit dem Prozessfilter verbindende Leitung.

Mit diesem Verfahren bzw. der oben aufgezeigten Anlage können die Emissionen der sauren Bestandteile Schwefeloxide, Chlorwasserstoff und Fluorwasserstoff sowie Quecksilber und seine Verbindungen stark reduziert werden. Ist der optional vorgesehene SCR-Katalysator vorhanden, werden auch Stickoxide, flüchtige Kohlenwasserstoffverbindungen sowie Dioxine und Furane stark reduziert und die Quecksilberabscheidung nochmals erhöht werden. Der bei dem Verfahren im Prozessfilter abgeschiedene Staub kann beispielsweise als Stoffstrom, der Zementmahlung zugesetzt und/oder entsorgt bzw. deponiert und/oder als Sorbens erneut dem Mühlenabgas zugeführt werden. Weiterhin kann der abgeschiedene Staub zur Extraktion des Alkalimetalls und abgeschiedener Schadstoffe aufbereitet werden, wodurch eine Rückführung des größten Anteils des Staubs Ofensystem oder zur Zementmühle möglich ist.

Weitere Ausgestaltungen der Erfindung sind Gegenstand der Unteransprüche.

Gemäß einer besonders bevorzugten Ausgestaltung der Erfindung wird Alkalihydrogencarbonat vor der Zugabe in das Mühlenabgas durch Injektion in ein Heißgas zu Alkalicarbonat calciniert. Dies geschieht zweckmäßig in einer Calciniereinrichtung mit einem Heißgasanschluss, einer Zuführstelle für Alkalihydrogencarbonat und einem Ausgang, wobei der Ausgang an eine die Abscheideeinrichtung mit dem Prozessfilter verbindende Leitung angeschlossen ist.

Gemäß einer weiteren Ausgestaltung der Erfindung wird als Heißgas für die Calcination des Alkalihydrogencarbonats ein Teilstrom eines im Zementherstellungsprozess anfallenden heißen Abgases, insbesondere das im Vorwärmer genutzte heiße Abgas, verwendet. Auf diese Weise ergibt sich eine besonders wirtschaftliche Calcination des Alkalicarbonats.

Weiterhin kann die Zugabe von Aktivkohle oder Herdofenkoks zwischen Abscheideeinrichtung und Prozessfilter vorgesehen werden, um insbesondere eine Steigerung der Reduzierung von Quecksilber sehr effektiv zu ermöglichen.

Gemäß einer weiteren Ausgestaltung der Erfindung ist zwischen dem Vorwärmer und der Rohmühle ein SCR Katalysator geschaltet, wobei zwischen Vorwärmer und SCR-Katalysator zudem ein Heißelektrofilter vorgesehen werden kann. Auch die sich an die Rohmühle anschließende Abscheideeinrichtung wir vorzugsweise durch einen Elektrofilter gebildet.

Weiterhin ist bekannt, dass Alkalihydrogencarbonat auch eine begrenzte Adsorptionswirkung für Quecksilber und seine Verbindungen aufweist. Ein vorgeschalteter SCR-Katalysator hat auf das im Abgas enthaltene Quecksilber eine oxidierende Wirkung, wodurch die Adsorptionswirkung des Alkalihydrogencarbonats für Quecksilber erhöht wird.

Im Folgenden werden verschiedene Ausführungsbeispiele der Erfindung anhand der Zeichnung und der Beschreibung näher erläutert.

In der Zeichnung zeigen:
- Fig. 1:: eine schematische Darstellung einer Anlage zur Herstellung von Zementklinker und zur Reinigung der dabei entstehenden Abgase gemäß einem ersten Ausführungsbeispiel,
- Fig. 2:: eine schematische Darstellung einer Anlage zur Herstellung von Zementklinker und zur Reinigung der dabei entstehenden Abgase gemäß einem zweiten Ausführungsbeispiel und
- Fig. 3:: eine schematische Darstellung einer Anlage zur Herstellung von Zementklinker und zur Reinigung der dabei entstehenden Abgase gemäß einem dritten Ausführungsbeispiel.

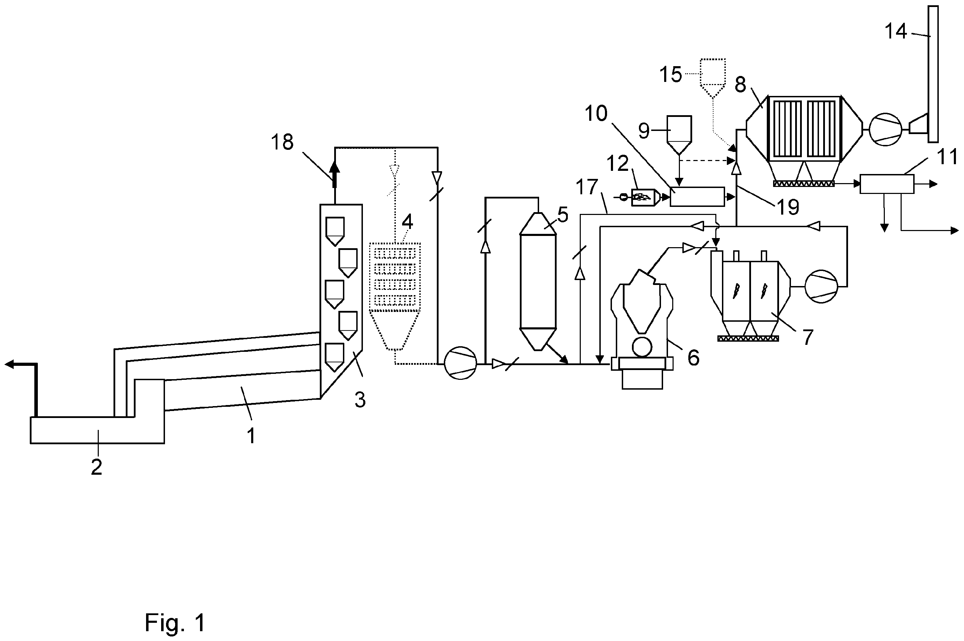

Die in Fig. 1 dargestellte Anlage besteht im Wesentlichen aus einem Drehrohrofen 1 einem Kühler 2 und einem Vorwärmer 3. Die Abgase des Drehrohrofens werden in üblicher Form zur Vorwärmung von Zementrohmehl im Vorwärmer genutzt. Die im Vorwärmer entstehenden Vorwärmerabgase 18 werden im Verbundbetrieb über eine Rohmühle 6 mit nach geschalteter Abscheideeinrichtung 7 geführt, bevor das Abgas im Prozessfilter 8 vor einem Abgaskamin 14 gereinigt wird. Im Direktbetrieb wird die Rohmühle 6 umgangen, wobei das Vorwärmerabgas über einen Kühlturm 5 und eine Leitung 17 direkt in die Abscheideeinrichtung 7 und von dort in den Prozessfilter 8 gelangt. Durch die Klappeneinstellungen werden die jeweils gewünschten Gasströme eingestellt, auf die hier aber nicht näher eingegangen werden soll.

Für die Abscheideeinrichtung 7 nach der Rohmühle 6 wird bevorzugt ein Elektrofilter eingesetzt, da dieses die gewünschten Reststaubgehalte von weniger als 5g/Nm³, vorzugsweise weniger als 1g/Nm³, im Gegensatz zu Zyklonen, ermöglicht und zudem für die Anwendung kleiner baut als ein Schlauchfilter und geringere Druckverluste aufweist. Hierdurch wird im Vergleich zu den üblichen Zyklonen auch noch elektrische Energie eingespart. Die Gasgeschwindigkeit im Elektrofilter beträgt vorzugsweise mehr als 1,4 m/s.

Für den abschließenden Prozessfilter wird vorzugsweise ein Schlauchfilter eingesetzt, da auf dem Filterkuchen die Sorption der Schadstoffe verbessert wird. Aufgrund der niedrigen Staubmengen durch die Abscheideeinrichtung 7 kann der Prozessfilter mit einem hohen Verhältnis von Gasvolumenstrom zu Schlauchfläche ausgelegt werden (insbesondere größer oder gleich 1,2 m³/(m² min)) und somit kleiner werden, als ohne die Vorabscheidung. Zudem sinkt der Druckverlust im Schlauchfilter und damit der elektrische Energiebedarf.

Die Erfindung sieht weiterhin die Zugabe eines Sorbens in Form von Alkalihydrogencarbonat und/oder Alkalicarbonat 9 vor. Hierbei kann das Sorbens entweder direkt (gestrichelte Linie) oder über eine Calciniereinrichtung 10 in eine die Abscheideeinrichtung 7 und den Prozessfilter 8 verbindende Leitung 19 zugeführt werden. Im Direktbetrieb wird das durch den Kühlturm 5 vorkonditionierte Abgas durch die Gasleitung 17 an der Rohmühle 6 vorbei direkt zur Abscheideeinrichtung 7 geführt und dort vorentstaubt, damit danach die Sorbensinjektion erfolgen kann und das Abgas mit dem Reststaub und dem Sorbens im Prozessfilter 8 abgeschieden wird. In diesem Betriebsmodus ist keine zusätzliche Wärmezufuhr zur Calcination erforderlich.

Bei der Calcination des Alkalihydrogencarbonats 9, die bei ausreichend hoher Temperatur in sehr kurzer Zeit abläuft, entsteht hochporöses Alkalicarbonat, das zur Adsorption der im Abgas enthaltenen Schadstoffe besonders gut geeignet ist. Durch die Vorentstaubung in der Abscheideeinrichtung 7 ist der Reststaubgehalt gering, sodass die Verdünnung des hochporöses Alkalicarbonats akzeptabel ist und vor allem die im Prozessfilter anfallende Reststaubmenge begrenzt bleibt.

Insbesondere im Verbundbetrieb reicht die Wärme des Mühlenabgases meist nicht mehr für eine schnelle Calcination des Alkalihydrogencarbonats 9 aus, sodass die Calciniereinrichtung 10 zum Einsatz kommt, die im dargestellten Ausführungsbeispiel über eine zusätzliche Feuerung 12 mit Wärme versorgt wird.

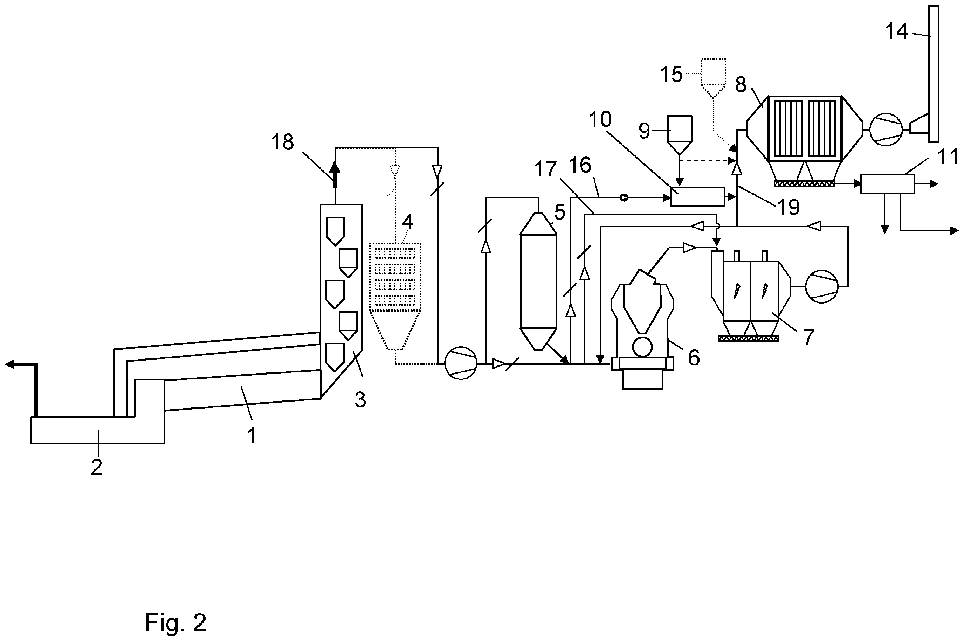

Im Ausführungsbeispiel der Fig. 2 wird satt der zusätzliche Feuerung 12 ein kleiner Teilgasstrom des hier noch ausreichend heißen Vorwärmerabgases 18 über eine Leitung 16 der Calciniereinrichtung 10 zugeführt. Hierdurch vermindert sich der Energieverbrauch und der anlagentechnische Aufwand signifikant, da die in Fig. 1 dargestellte Feuerung 12 nicht mehr erforderlich ist.

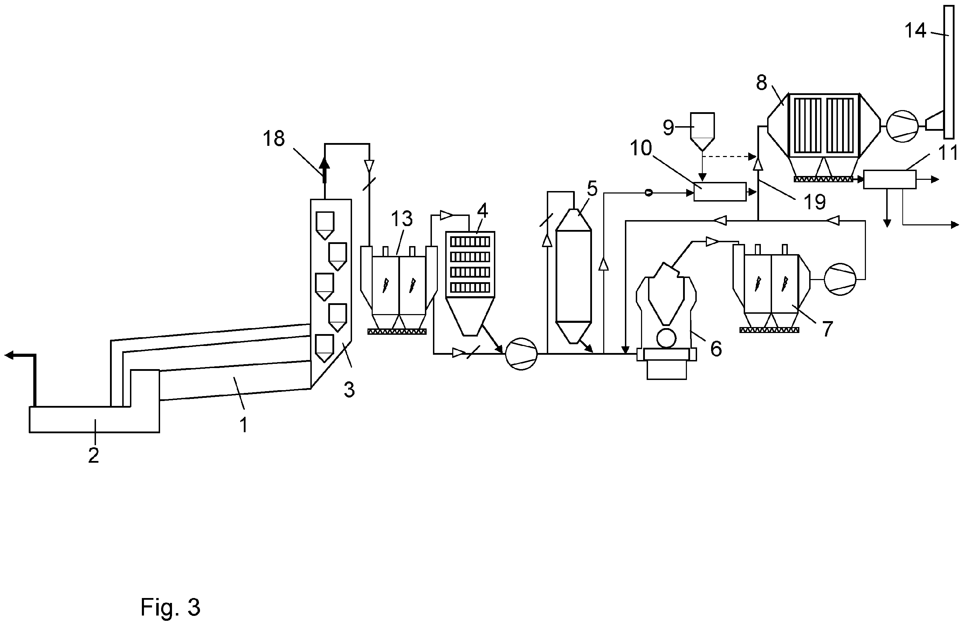

Optional kann in den beiden Ausführungsbeispielen ein SCR-Katalysator 4 in High-Dust-Schaltung nach dem Vorwärmer 3 angeordnet sein. In Fig. 3 ist der SCR-Katalysator 4 mit vorgeschaltetem Heißelektrofilter 13 dargestellt. In diesem Fall ist im Direktbetrieb keine Gasleitung 17 zum Filter 7 erforderlich, da die Entstaubung durch den Heißelektrofilter 13 erfolgt. Durch einen zusätzlichen Ausgang am Heißelektrofilter 13 kann der Katalysator zudem umgangen werden.

In allen drei Ausführungsbeispielen ist als weitere Option die Zugabe von Aktivkohle oder Herdofenkoks 15 gezeigt, die in dieser Darstellung getrennt dosiert wird. Alternativ kann diese Zugabe auch in die Calciniereinrichtung 10 erfolgen. Aktivkohle oder Herdofenkoks kann die Quecksilberabscheidung signifikant, insbesondere auf 95% oder mehr, verbessern. Eine vorhergehende Quecksilberoxidation im SCR-Katalysator 4 wirkt sich dabei zusätzlich positiv auf die Abscheiderate aus.

Im Prozessfilter wird das zugeführte und mit Schadstoffen und den zugeführten Sorbentien belastete Abgas so gereinigt, das die vorgegebenen Grenzwerte für das über den Abluftkamin in die Atmosphäre entlassene gereinigte Abgas eingehalten werden. Die im Prozessfilter 8 abgeschiedene Mischung aus Prozessstaub und Sorbens kann in einer Einrichtung 11 aufgearbeitet werden.

Bei der Aufbereitung kann das durch SO₂-Abscheidung entstandene Alkalisulfat in bekannter Art und Weise durch Wäsche mit einem Calciumhalogenid zu Calciumsulfat und Alkalihalogenid gewandelt werden. In diesem Zusammenhang wird auf die DE 10 2009 030 902 A1 verwiesen. Das abgetrennte Calciumsulfat kann wiederum als Erstarrungsregler in der Zementmühle verwendet werden.. Quecksilber kann durch Aufheizung auf hohe Temperaturen ausgetrieben und in einem Bett aus Aktivkohle oder Herdofenkoks sehr hoch aufkonzentriert werden, um die zu deponierenden Mengen klein zu halten. In diesem Zusammenhang wird auf die DE 10 2009 036 950 A1 verwiesen.

Weiterhin kann noch nutzbares Sorbens rezirkuliert und erneut dem Abgas zugegeben werden. Der verbleibende Rest wird deponiert.

## Patentansprüche

1. Verfahren zur Herstellung von Zementklinker und zur Reinigung der dabei entstehenden Abgase, wobei
- Zementrohmehl in einem Vorwärmer (3) mittels heißer Abgase vorgewärmt wird,
- das vorgewärmte Zementrohmehl in einem Drehrohrofen (1) zu Zementklinker gebrannt wird oder das vorgewärmte Zementrohmehl zunächst vorcalciniert wird, bevor es im Drehrohrofen zu Zementklinker gebrannt wird,
- der Zementklinker in einem Kühler (2) abgekühlt wird,
- die im Vorwärmer (3) genutzten heißen Abgase in einer Rohmühle (6) zur Aufbereitung des Zementrohmehls eingesetzt werden,
- ein dabei entstehendes staubhaltiges Mühlenabgas in einer Abscheideeinrichtung (7) im Staubgehalt reduziert wird und
- nachfolgend in einem abschließenden Prozessfilter (8) vor einem Abgaskamin (14) gereinigt wird,
**dadurch gekennzeichnet, dass**
- der Staubgehalt des Mühlenabgases in der Abscheideeinrichtung (7) auf weniger als 5g/Nm³ reduziert wird,
- in einer Calciniereinrichtung (10) Alkalihydrogencarbonat durch Injektion in ein Heißgas zu Alkalicarbonat calciniert wird,
- in den im Staubgehalt auf weniger als 5g/Nm³ reduzierten, von der Abscheideeinrichtung (7) zum Prozessfilter (8) geleiteten Teil des Mühlenabgases das Alkalicarbonat zugegeben und vermischt wird und
- das dabei entstehende Mischgas nachfolgend dem Prozessfilter (8) zur Abscheidung von mit Schadstoffen belasteten Staub zugeführt wird.

2. Verfahren nach Anspruch 1, **dadurch gekennzeichnet, dass** als Heißgas für die Calcination des Alkalihydrogencarbonats ein Teilstrom der im Vorwärmer (3) genutzten heißen Abgase verwendet wird.

3. Verfahren nach Anspruch 1, **dadurch gekennzeichnet, dass** der mit Schadstoffen belastete Staub aus dem Prozessfilter (8) entsorgt oder zur Extraktion von Alkalimetall und abgeschiedener Schadstoffe aufbereitet wird.

4. Verfahren nach Anspruch 2, **dadurch gekennzeichnet, dass** der im Prozessfilter (8) abgeschiedene Staub inklusive der Sorbentien und Schadstoffe durch Zugabe eines Calciumhalogenids aufbereitet wird und das dabei entstehende Calciumsulfat abgetrennt und bei der Zementherstellung als Zusatzstoff verwendet wird.

5. Verfahren nach Anspruch 1, **dadurch gekennzeichnet, dass** zusätzlich Aktivkohle oder Herdofenkoks zwischen Abscheideeinrichtung (7) und Prozessfilter (8) dem Abgas zugegeben wird.

6. Anlage zur Herstellung von Zementklinker und zur Reinigung der dabei entstehenden Abgase gemäß Anspruch 1 mit
- einem Vorwärmer (4) zum Vorwärmen von Zementrohmehl,
- einem optionalen Calcinator zum Vorcalcinieren des vorgewärmten Zementrohmehls,
- einen Drehrohrofen (1) zum Brennen des vorgewärmten und ggf.
vorcalcinierten Zementrohmehls zu Zementklinker,
- einen Kühler (2) zum Kühlen des Zementklinkers,
- einer Rohmühle (6) zum Trocknen und Mahlen von Zementrohstoffen zu Zementrohmehl, welche zur Zuführung von heißen Vorwärmerabgasen (18) mit dem Vorwärmer (3) in Verbindung steht,
- einer sich an die Rohmühle (6) anschließenden Abscheideeinrichtung (7) zur Vorentstaubung eines Mühlenabgases der Rohmühle (6) und
- einem nachgeschalteten, vor einem Abgaskamin (14) angeordneten Prozessfilter (8) zum Reinigen des vorentstaubten Mühlenabgases,
**dadurch gekennzeichnet, dass**
- die sich an die Rohmühle (6) anschließende Abscheideeinrichtung (7) einen Abscheidegrad aufweist, der einem Reststaubgehalt von weniger als 5g/Nm³ entspricht,
- eine Calciniereinrichtung (10) mit einem Heißgasanschluss, einer Zuführstelle für Alkalihydrogencarbonat und einem Ausgang vorgesehen ist,
- wobei der Ausgang über eine Zuführstelle für Alkalicarbonat an eine die Abscheideeinrichtung (7) mit dem Prozessfilter (8) verbindende Leitung (19) vorgesehen ist.

7. Anlage nach Anspruch 6, **dadurch gekennzeichnet, dass** Heißgasanschluss der Calciniereinrichtung (10) zur Zuführung von heißen Vorwärmerabgasen mit dem Vorwärmer (3) in Verbindung steht.

8. Anlage nach Anspruch 6, **dadurch gekennzeichnet, dass** zwischen dem Vorwärmer (3) und der Rohmühle (6) ein SCR Katalysator (4) geschaltet ist.

9. Anlage nach Anspruch 8, **dadurch gekennzeichnet, dass** zwischen Vorwärmer (3) und SCR-Katalysator (4) ein Heißelektrofilter (13) geschaltet ist.

10. Anlage nach Anspruch 6, **dadurch gekennzeichnet, dass** die sich an die Rohmühle (6) anschließende Abscheideeinrichtung (7) durch einen Elektrofilter gebildet wird.

## Claims

1. Process for producing cement clinker and for purifying the off-gases formed thereby, wherein
- cement raw meal is preheated in a preheater(3) by means of hot off-gases,
- the preheated cement raw meal is burnt in a rotary kiln (1) to form cement clinker, or the preheated cement raw meal is first precalcined before it is burnt in the rotary kiln to form cement clinker,
- the cement clinker is cooled in a cooler (2),
- the hot off-gases used in the preheater (3) are used in a raw mill (6) for treating the cement raw meal,
- the dust content of a dust-containing mill off-gas formed thereby is reduced in a separating device (7), and
- the mill off-gas is subsequently purified in a final process filter (8) upstream of an off-gas chimney,
**characterized in that**
- the dust content of the mill off-gas is reduced in the separating device (7) to less than 5 g/Nm³,
- in a calcination device (10) alkali hydrogen carbonate is calcined to form alkali carbonate by injection into a hot gas,
- alkali carbonate is added to and mixed with the portion of the mill off-gas whose dust content has been reduced to less than 5 g/Nm³ and which has been passed from the separating device (7) to the process filter (8), and
- the mixed gas formed thereby is subsequently fed to the process filter (8) for separation of dust laden with pollutants.

2. Process according to claim 1, **characterized in that** there is used as the hot gas for the calcination of the alkali hydrogen carbonate a partial stream of the hot off-gases used in the preheater (3).

3. Process according to claim 1, **characterized in that** the dust laden with pollutants from the process filter (8) is disposed of or treated for the extraction of alkali metal and separated pollutants.

4. Process according to claim 2, **characterized in that** the dust separated in the process filter (8), including the sorbents and pollutants, is treated by addition of a calcium halide, and the calcium sulfate formed thereby is separated off and used as an additive in the cement production.

5. Process according to claim 1, **characterized in that** activated carbon or lignite coke is additionally added to the off-gas between the separating device (7) and the process filter (8).

6. Plant for producing cement clinker and for purifying the off-gases formed thereby according to claim 1, having
- a preheater (4) for preheating cement raw meal,
- an optional calcinatory for precalcining the preheated cement raw meal,
- a rotary kiln (1) for burning the preheated and optionally precalcined cement raw meal to form cement clinker,
- a cooler (2) for cooling the cement clinker,
- a raw mill (6) for drying and grinding cement raw materials to form cement raw meal, which raw mill (6) is connected to the preheater (3) for the supply of hot preheater off-gases (18),
- a separating device (7), connected to the raw mill (6), for pre-dedusting a mill off-gas of the raw mill (6), and
- a downstream process filter (8) arranged upstream of an off-gas chimney (14), for purifying the pre-dedusted mill off-gas,
**characterized in that**
- the separating device (7) connected to the raw mill (6) has a separation efficiency that corresponds to a residual dust content of less than 5 g/Nm³,
- a calcination device (10) having a hot gas connection, a feed point for alkali hydrogen carbonate and an outlet is provided,
- the outlet being connected to a line (19) connecting the separating device (7) to the process filter (8).

7. Plant according to claim 6, **characterized in that** the hot gas connection of the calcination device (10) is connected to the preheater (3) for the supply of hot preheater off-gases.

8. Plant according to claim 6, **characterized in that** an SCR catalyst (4) is arranged between the preheater (3) and the raw mill (6).

9. Plant according to claim 8, **characterized in that** a hot electrostatic filter (13) is arranged between the preheater (3) and the SCR catalyst (4).

10. Plant according to claim 6, **characterized in that** the separating device (7) connected to the raw mill (6) is formed by an electrostatic filter.

## Revendications

1. Procédé de fabrication de clinker de ciment et d'épuration des effluents gazeux qui en résultent, sachant que
- de la farine de ciment crue est préchauffée dans un préchauffeur (3) au moyen des effluents gazeux chauds,
- le farine de ciment crue préchauffée est cuite en ciment dans un four à tube rotatif (1) ou que la farine de ciment crue préchauffée est d'abord précalcinée, avant d'être cuite dans le four à tube rotatif pour former un clinker de ciment,
- le clinker de ciment est refroidi dans un réfrigérateur (2),
- les effluents gazeux chauds, utilisés dans le préchauffeur (3), sont mis en oeuvre dans un broyeur de farine de ciment crue (6) pour le traitement de la farine de ciment crue,
- la teneur en poussière d'un effluent gazeux, chargé de poussières, en provenance du broyeur, est réduite dans une installation de séparation (7), et
- est ensuite épurée dans un filtre de traitement (8), en amont d'une cheminée (14) destinée aux effluents gazeux,
**caractérisé en ce que**
- la teneur en poussières des effluents gazeux, provenant du broyeur est réduite à moins de 5 g / Nm³, dans une installation de séparation (7),
- dans une installation de calcination (10), du carbonate hydrogène alcalin est calciné en carbonate alcalin par injection dans un gaz à haute température,
- le carbonate alcalin est ajouté et mélangé dans la partie des effluents gazeux du broyeur conduite de l'installation de séparation (7) au filtre de traitement (8), dont la teneur en poussières est réduite à moins de 5 g /Nm³
- le gaz mixte, ainsi obtenu, est ensuite conduit au filtre de traitement (8) pour l'élimination des poussières chargées de matières polluantes.

2. Procédé selon la revendication 1, **caractérisé en ce que,** pour la calcination du carbonate d'hydrogène alcalin, on utilise, en tant que gaz chaud, un flux partiel des effluents gazeux chauds, qui sont utilisés dans le préchauffeur (3).

3. Procédé selon la revendication 1, **caractérisé en ce que** les poussières chargées de matières polluantes, sont éliminées à partir du filtre de traitement (8) ou sont traitées aux fins d'extraction de métal alcalin et de matières polluantes séparées.

4. Procédé selon la revendication 2, **caractérisé en ce que** les poussières, ayant été séparées dans le filtre de traitement (8), sont traitées, y compris les sorbants et les matières polluantes, par adduction d'halogénure de calcium, et le sulfate de calcium ainsi obtenu est séparé et est utilisé en tant qu'additif pour la fabrication de ciment.

5. Procédé selon la revendication 1, **cactérisé en ce que** du charbon actif ou du coke de four à sole sont ajoutés en supplément au effluents gazeux, entre l'installation de séparation (7) et le filtre de traitement (8).

6. Installation de fabrication de clinker de ciment et d'épuration des effluents gazeux qui en résultent selon la revendication 1, avec
- un préchauffeur (4) pour le préchauffage de la farine de ciment crue,
- un calcinateur en option, pour la précalcination de la farine de ciment crue, préchauffée,
- un four à tube rotatif (1) pour la cuisson de la farine de ciment crue préchauffée et, le cas échéant, précalcinée, pour l'obtention de clinker de ciment,
- un réfrigérateur (2) pour le refroidissement du clinker de ciment,
- un broyeur de farine de ciment crue (6) pour le séchage et le broyage de matières brutes de ciment pour l'obtention de farine de ciment crue, lequel broyeur est en communication avec le préchauffeur (3) pour l'amenée des effluents gazeux chauds (18) aux fins de chauffage préalable,
- une installation de séparation (7), qui fait suite au broyeur de farine de ciment crue (6) pour le dépoussiérage préalable des effluents gazeux en provenance du broyeur de farine de ciment crue (6), et,
- en aval de celle-ci, un filtre de traitement (8), qui, situé en amont d'une cheminée pour les effluents gazeux (14), est destiné à l'épuration des effluents gazeux, dépoussiérés préalablement, provenant du broyeur,
**caractérisée en ce que**
- l'installation de séparation (7), qui fait suite au broyeur de farine de ciment crue (6), présente un degré de séparation, qui correspond à une teneur en poussière résiduelle de moins de 5 g / Nm³,
- une installation de calcination (10) est prévue, avec un raccord pour les effluents gazeux, un point d'admission de carbonate d'hydrogène alcalin et une sortie,
- sachant que la sortie, par l'intermédiaire du point d'admission de carbonate, est prévue sur une conduite (19), qui relie l'installation de séparation (7) au filtre de traitement (8).

7. Installation selon la revendication 6, **caractérisée en ce que** le raccord pour les effluents gazeux de l'installation de calcination (10) est en communication avec le préchauffeur (3) pour l'amenée des effluents gazeux chauds en provenance du préchauffeur.

8. Installation selon la revendication 6, **caractérisée en ce que,** entre le préchauffeur (3) et le broyeur de farine de ciment crue (6), est connecté un catalyseur SCR (4).

9. Installation selon la revendication 8, **caractérisée en ce que,** entre le préchauffeur (3) et le catalyseur SCR (4), est connecté un filtre électrique à chaud (13).

10. Installation selon la revendication 6, **caractérisée en ce que** l'installations de séparation (7), qui fait suite au broyeur de farine de ciment crue (6), est formée par un filtre électrique.
